# EUROPEAN PATENT APPLICATION

(11) **EP 3 451 486 A1**
(43) Date of publication of application: **06.03.2019**
(21) Application number: 18190605.8
(22) Date of filing: 24.08.2018
(51) Int. Cl.: H02J 7/00

(54) **SYSTEM FOR CHARGING AN ELECTRICALLY POWERED VEHICLE**

(30) Priority: 01.09.2017 SE 1751056
(71) Applicant: Scania CV AB, 151 87 Södertälje (SE)
(72) Inventor: TJÄRNBRO, Fredrik, SE-150 23 Enhörna (SE)
(74) Representative: Scania CV AB

(57) **Abstract**

The present invention relates to a system (S) for charging an electrically powered vehicle (V2). The system comprises a vehicle (V1), a mobile generator unit (10) for generating electric power for said charging, said vehicle (V1) being configured to carry and transport said mobile generator unit (10). The system (S) further comprises an electric power transfer device (20) electrically connected to said mobile generator unit (10) and configured to be connected to said electrically powered vehicle (V2) for charging.

The present invention also relates to a vehicle (V1).

## Description

### TECHNICAL FIELD

The invention relates to a system for charging an electrically powered vehicle. The invention also relates to a vehicle.

### BACKGROUND ART

Electrically powered vehicles are becoming more common. For example electrically powered buses are being used to a greater extent. Such electrically powered vehicles are configured to be charged on charging stations.

There may however be situations where such an electrically powered vehicle requires charging and not having access to a charging station, such as situations where an electrically powered vehicle has run out of power due to an unexpected situation or at a test facility where the electrically powered vehicle runs out of power due to power lasting tests of the vehicle. Such situations may result in the electrically powered vehicle needing to be towed to a charging station.

There is thus a need for facilitating charging of electrically powered vehicles in need of charging assistance.

### OBJECTS OF THE INVENTION

An object of the present invention is to provide a system for charging an electrically powered vehicle which easily and efficiently may assist in charging an electrically powered vehicle.

### SUMMARY OF THE INVENTION

These and other objects, apparent from the following description, are achieved by a system for charging an electrically powered vehicle, and a vehicle, as set out in the appended independent claims. Preferred embodiments of the method and the arrangement are defined in appended dependent claims.

Specifically an object of the invention is achieved by a system for charging an electrically powered vehicle. The system comprises a vehicle and a mobile generator unit for generating electric power for said charging, said vehicle being configured to carry and transport said mobile generator unit. The system further comprises an electric power transfer device electrically connected to said mobile generator unit and configured to be connected to said electrically powered vehicle for charging.

By thus providing a system with a vehicle, a mobile generator unit and an electric power transfer device electrically connected to said mobile generator unit assistance in charging an electrically powered vehicle may be easily and efficiently obtained so that towing of an electrically powered vehicle having run out of power can be avoided.

According to an embodiment of the system said electric power transfer device is attached to said mobile generator unit. Hereby an efficient system for charging an electrically powered vehicles is obtained thus facilitating said charging.

According to an embodiment of the system said electric power transfer device is movable relative to said mobile generator unit so as to reach said electrically powered vehicle during said charging and to enter a compact transport state during transport of said mobile generator unit. Hereby charging of an electrically powered vehicle is facilitated in that the electric power transfer device may be moveable so that it reaches electrically powered vehicles of different dimensions. Further said transport state facilitates safe and efficient transport in that said electric power transfer device will not take up unnecessary space or laterally extend from the vehicle to any greater extent during transport. Said electric power transfer device may be movably arranged relative to said mobile generator unit in any suitable way. Said electric power transfer device may be movably arranged relative to said mobile generator unit such that at least a portion of said electric power transfer device is pivotable and/or protrudeable relative to said mobile generator unit so that an arm portion may laterally extent from said mobile generator unit and hence vehicle of said system to reach the electrically powered vehicle for charging of the same. Said electric power transfer device may comprise an arm member configured to protrude laterally from the mobile generator and vehicle in order to reach the electrically powered vehicle for charging the same in a charging state. Said arm member may further be pivotable/protrudeable and be configured to thus be moved to a compact transport position when not used for charging. Said arm member may be moved by a moving member of said electric power transfer device. Said electric power transfer device may comprise a charging unit connected to said arm member for said charging of an electrically powered vehicle.

According to an embodiment of the system said electric power transfer device comprises a pantograph configuration. Hereby efficient and robust movement of said electric power transfer device relative to said mobile generator unit is facilitated.

According to an embodiment of the system said electrically powered vehicle is an electrically powered bus.

According to an embodiment of the system said mobile generator unit is arranged to be operated by means of an engine. Said engine is according to an embodiment an internal combustion engine.

According to an embodiment of the system said engine is arranged to be operated by means of gas fuel. Hereby an environmental friendly system for charging electrically operated vehicles is obtained. Said gas fuel may comprise natural gas or biogas. Said system for charging electrically operated vehicles thus according to an embodiment comprises a fuel system for natural gas or biogas. Said mobile generator unit of said system for charging electrically operated vehicles thus according to an embodiment comprises a fuel system for natural gas or biogas. Said fuel system for natural gas or biogas comprises one or more gas tanks operably connected to said engine.

Said fuel system is according to an embodiment a fuel system for compressed natural gas, CNG. Said fuel system is according to an embodiment a fuel system for compressed biogas, CBG. Said fuel system is according to an embodiment a fuel system for liquefied natural gas, LNG. Said fuel system is according to an embodiment a fuel system for liquefied biogas, LBG.

According to an embodiment of the system said engine is arranged to be operated by means of a diesel fuel. Said fuel system for diesel fuel comprises one or more diesel tanks operably connected to said engine.

Said engine may alternatively be operated by any other suitable fuel such as petrol fuel/gasoline fuel, ethanol fuel or hydrogen fuel. Said mobile generator unit of said system for charging electrically operated vehicles may thus comprise any suitable fuel system.

Said mobile generator unit comprises at least one generator operably connected to said engine. Said generator is configured to generate power for charging an electrically powered vehicle.

According to an embodiment of the system said mobile generator unit is a so called Genset. A so called Genset is suitable for said system for charging electrically powered vehicles such as buses.

Said mobile generator unit comprises an ancillary configuration comprising various ancillary devices such as control systems, circuit breakers and starting system. Said an ancillary configuration is part of said Genset, i.e. a generating set, for generating electric power for charging of electrically powered vehicles.

Said mobile generator unit has according to an embodiment a container configuration, i.e. is configured as a container unit. Said mobile generator unit comprises according to an embodiment a container portion. Said container portion may have any suitable configuration such as a canopy, box, container or the like for housing said engine and said generator and said ancillary configuration. Depending on type of fuel system the fuel tank the tank may be housed in said container portion, e.g. canopy, box, container or arranged externally in connection to said container portion, e.g. canopy, box, container.

Said mobile generator unit is configured as a so called swap body for road transport by means of a vehicle. This mobile generator unit thus functions as an exchangeable container or interchangeable unit and may be applied to different vehicles suitable for carrying said mobile generator unit.

Specifically an object of the invention is achieved by a vehicle configured to carry and transport a mobile generator unit and an electric power transfer device electrically connected to said mobile generator unit as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle being comprised in a system for charging an electrically powered vehicle according to an embodiment of the present invention; and
Fig. 2 schematically illustrates a front view of an electrically powered vehicle being charged by means of the system in fig. 1 according to an embodiment of the present invention.

### DETAILED DESCRIPTION

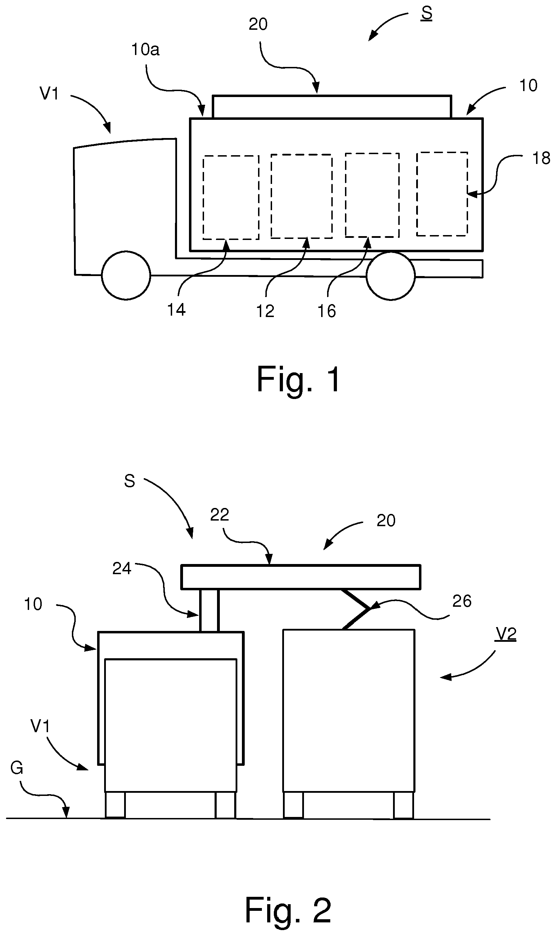

Fig. 1 schematically illustrates a side view of a vehicle V1 being comprised in a system S for charging an electrically powered vehicle according to an embodiment of the present invention. The exemplified vehicle V1 is a commercial vehicle in the shape of a truck. The exemplified vehicle V1 is configured to receive and support a mobile generator unit 10 according to the present invention.

The system S thus comprises said vehicle V1 and a mobile generator unit 10 for generating electric power for said charging. Said vehicle V1 is configured to carry and transport said mobile generator unit 10.

Said mobile generator unit 10 is arranged to be operated by means of an engine 12. Said engine 12 is according to an embodiment an internal combustion engine.

Said engine 12 may be operated by any suitable fuel such as diesel fuel, petrol fuel/gasoline fuel, ethanol fuel, hydrogen fuel, gas fuel such as compressed natural gas, CNG, compressed biogas, CBG, liquid natural gas, LNG, liquefied biogas, LBG, or liquefied petroleum gas, LPG. According to an embodiment of the system S said engine 12 is arranged to be operated by means of a gas fuel such as compressed natural gas, CNG.

Said mobile generator unit 10 of said system S for charging electrically operated vehicles thus according to an embodiment comprises a fuel system 14 for fuelling said engine by means of said fuel. Said fuel system 14 comprises one or more tanks operably connected to said engine 12.

According to an embodiment of the system said mobile generator unit 10 is a so called Genset. Such a Genset, i.e. a generating set, is configured for generating electric power for charging of electrically powered vehicles.

Said mobile generator unit 10 comprises at least one generator 16 operably connected to said engine. Said generator 16 is configured to generate power for charging an electrically powered vehicle.

Said mobile generator unit 10 comprises an ancillary configuration 18 comprising various ancillary devices. Said ancillary devices may comprise control systems, circuit breakers, starting system and the like.

Said mobile generator unit 10 has according to an embodiment a container configuration, i.e. is configured as a container unit. Said mobile generator unit 10 comprises according to an embodiment a container portion 10a. Said container portion may have any suitable configuration such as a canopy, box, container or the like for housing said engine 12 and said generator 16 and said ancillary configuration 18. Depending on type of fuel system 14 the fuel tank the tank may be housed in said container portion 10a, e.g. canopy, box, container or arranged externally in connection to said container portion 10a, e.g. canopy, box, container.

Said mobile generator unit 10 is configured as a so called swap body for road transport by means of a vehicle. This mobile generator unit 10 thus functions as an exchangeable container or interchangeable unit and may be applied to different vehicles suitable for carrying said mobile generator unit 10.

The system S further comprises an electric power transfer device 20 electrically connected to said mobile generator 10 unit and configured to be connected to said electrically powered vehicle for charging.

According to an embodiment of the system S said electric power transfer device 20 is attached to said mobile generator unit 10. An embodiment of said electric power transfer device 20 is described in more detail with reference to fig. 2 below.

Fig. 2 schematically illustrates a front view of an electrically powered vehicle V2 being charged by means of the system S in fig. 1 according to an embodiment of the present invention. Said vehicle V1, V2 are standing on the ground G which may be any suitable location such at the side of a road, a parking space or the like.

According to the embodiment of the system S described with reference to fig. 2, said electric power transfer device 20 is movable relative to said mobile generator unit 10 so as to reach said electrically powered vehicle V2 during said charging and to enter a compact transport state during transport of said mobile generator unit. The compact transport state of said electric power transfer device 20 is illustrated in fig. 1.

Thus said electric power transfer device 20 is movable relative to said mobile generator unit 10 between a charging state in which it is configured to reach said electrically powered vehicle V2 and a compact transport state during transport of said mobile generator unit.

Said electric power transfer device 20 comprises a arm member 22 configured to protrude laterally from said mobile generator unit 10 and hence from said vehicle V1 so that it reaches towards the electrically powered vehicle V2 to be charged, when said vehicle V1 is located next to said vehicle V2.

Said electric power transfer device 20 comprises a moving member 24 connecting said arm member 22 to said mobile generator unit 10. Said moving member 24 is configured to move said arm member 22 between said compact transport state shown in fig. 1 and said charging state shown in fig. 2. Said moving member 24 may be configured to pivot said arm member 22 between said transport state and said charging state. Said moving member 24 may be configured to raise and lower said arm member 22 in connection to moving said arm member 22.

Said electric power transfer device 20 comprises a charging unit 26 connected to said arm member 22 and configured to connect to a connection portion of the electrically powered vehicle V2 for charging said vehicle V2. According to the embodiment illustrated in fig. 2 said connection portion of the vehicle V2 is on the roof of the vehicle V2. Said electrically powered vehicle V2 is thus configured to receive said electric power transfer device 20 for said charging of the vehicle V2. Said electrically powered vehicle V2 is thus configured to receive said charging unit 26 of said electric power transfer device 20 for said charging of the vehicle V2.

According to an embodiment of the system said electric power transfer device 20 comprises a pantograph configuration 22, 24, 26.

Said system S for charging an electrically powered vehicle V2 may comprise any suitable means for controlling said charging, not shown. Said means for controlling said charging may comprise means for controlling said electric power transfer device 20 between said transport state and said charging state. Said means for controlling said charging may be any suitable control member comprising any control member arranged in said vehicle V1 and/or a remote control member for externally controlling said charging and hence said electric power transfer device. A remote control member may comprise a smart phone, tablet or the like.

According to an embodiment said electrically powered vehicle V2 is an electrically powered bus.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A system (S) for charging an electrically powered vehicle (V2), **characterized in** a vehicle (V1), a mobile generator unit (10) for generating electric power for said charging, said vehicle (V1) being configured to carry and transport said mobile generator unit (10), and an electric power transfer device (20) electrically connected to said mobile generator unit (10) and configured to be connected to said electrically powered vehicle (V2) for charging.

2. A system according to claim 1, wherein said electric power transfer device (20) is attached to said mobile generator unit (10).

3. A system according to claim 1 or 2, wherein said electric power transfer device (20) is movable relative to said mobile generator unit (10) so as to reach said electrically powered vehicle (V2) during said charging and to enter a compact transport state during transport of said mobile generator unit (10).

4. A system according to any of claims 1-3, wherein said electric power transfer device (20) comprises a pantograph configuration (22, 24, 26).

5. A system according to any of claims 1-4, wherein said electrically powered vehicle (V2) is an electrically powered bus.

6. A system according to any of claims 1-5, wherein said mobile generator unit (10) is arranged to be operated by means of an engine (12).

7. A system according to claim 6, wherein said engine (12) is arranged to be operated by means of a gas fuel.

8. A system according to any of claims 1-7, wherein said mobile generator unit (10) is a so called Genset.

9. A vehicle (V1) configured to carry and transport a mobile generator unit (10) and an electric power transfer device (20) electrically connected to said mobile generator unit (10) according to any of claims 1-8.
